# EUROPÄISCHE PATENTSCHRIFT

(11) **EP 0 960 801 B1**
(45) Veröffentlichungstag und Bekanntmachung des Hinweises auf die Patenterteilung: **06.08.2003**
(21) Anmeldenummer: 99117508.4
(22) Anmeldetag: 04.03.1998
(51) Int. Cl.: B62D 65/00, B60R 13/02

(54) **Fahrzeugdach**
Vehicle roof
Toit de véhicule

(30) Priorität: 06.03.1997 DE 19709016
(43) Veröffentlichungstag der Anmeldung: 01.12.1999
(62) Teilanmeldung aus: 98916841.4
(73) Patentinhaber: ArvinMeritor GmbH, 63128 Dietzenbach (DE)
(72) Erfinder: Böhm, Horst, 60599 Frankfurt (DE); Grimm, Rainer, 60599 Frankfurt (DE); Becher, Thomas, 63110 Rodgau (DE)
(74) Vertreter: Oppermann, Mark, Dipl.-Ing.

(56) Entgegenhaltungen:
- DE-A- 3 429 880
- FR-A- 2 529 844
- US-A- 4 358 883

## Beschreibung

Die Erfindung bezieht sich auf ein Fahrzeugdach, insbesondere Kraftfahrzeugdach.

Bei herkömmlichen Fahrzeugkarosserien ist das Fahrzeugdach, das eine Dachöffnung aufweisen kann, der ein verlagerbarer Deckel oder ein Faltdach zugeordnet sein kann, ein fester in die Karosserie integrierter Bestandteil, der sich unmittelbar an die Säulen der Karosserie anschließt. Bei derartigen Karosserien sind der Dachhimmel und ggf. weitere Verkleidungsteile sowie andere im Dachbereich anzubringende Fahrzeugteile, wie Sonnenblenden, Haltegriffe und - falls vorhanden - Schiebe- oder Faltdachelemente nachträglich und teilweise vom Fahrzeuginnenraum her zu montieren.

Es sind aber auch bereits Fahrzeugdächer vorgeschlagen worden, die als Module getrennt von der Fahrzeugkarosserie hergestellt und mit ihren Außenrändern auf einen an den Karosseriesäulen angebrachten Karosserierahmen aufgelegt und mit diesem durch Kleben oder Schrauben fest verbunden werden (z.B. EP-A-0 075 754). In diesem Zusammenhang wird in der DE-A-28 45 708 ein Fahrzeugdach offenbart, das als vorgeformte Sandwichplatte ausgebildet ist, die an der Außenseite eine Dachhaut und an der Innenseite ein Polster- und/oder Bezugsmaterial als Dachhimmel aufweist. Durch die Vormontage werden die Montagezeiten am Endmontageband verkürzt. Allerdings sind noch randüberdeckende äußere Abdeckleisten und die Holme des Dachrahmens von innen verkleidende Abdeckprofile zusätzlich anzubringen, was die Montagezeiten erhöht.

Ein anderes modulartig ausgebildetes bekanntes Fahrzeugdach (FR-A-2 529 844), das einen aus Schaummaterial gebildeten Innenbelag aufweist, der einteilig mit vier Klappen versehen ist, welche mit dem Zentralbereich des Innenbelags über durch Verjüngungen ausgebildete Scharnierstellen verbunden sind, ist nicht wie das hier Offenbarte Fahrzeugdach zur Auflage auf einen geschlossenen Karosserierahmen ausgebildet, sondern wird auf zwei seitliche Längsholme der Karosserie aufgesetzt. Vorn und hinten besitzt das Fahrzeugdach damit integrierte Hohlkörper, deren überstehenden Kanten jeweils die Windschutzscheibe bzw. das Heckfenster aufnehmen. Die Klappen des Innenbelags sind formbeständig ausgebildet und dienen seitlich der Verkleidung der Längsholme und vorn sowie hinten der Abdeckung der Dachränder und der oberen Ränder der Fenster. Bei der Montage dieses bekannten Fahrzeugdachs sind nur die beiden seitlichen Klappen nach unten/innen zu verschwenken, um beim Aufsetzen des Fahrzeugdachs zwischen den beiden seitlichen Längsholmen hindurchtreten zu können. Die vorderen und hinteren Klappen dienen beim anschließenden Einsetzen des vorderen und hinteren Fensters als Montagehilfe. Im Ergebnis können die Klappen dieses Fahrzeugdachs nicht gleichzeitig nach unten/innen geklappt werden bzw. wären sich dabei gegenseitig im Wege, so daß dieses Fahrzeugdach zum Aufsetzen auf einen geschlossenen Karosserierahmen ungeeignet ist.

Der Erfindung liegt die Aufgabe zugrunde, ein einfach ausgebildetes Fahrzeugdach mit integriertem Dachhimmel zu schaffen, welches bei geringen Montagezeiten leicht am geschlossenen Karosserierahmen des Fahrzeugs montiert werden kann.

Die gestellte Aufgabe wird erfindungsgemäß durch die Merkmale des Patentanspruchs 1 gelöst. Vorteilhafte bzw. zweckmäßige Weiterbildungen der Erfindung sind Gegenstand der Patentansprüche 2 bis 6.

Erfindungsgemäß steht bei einem Fahrzeugdach, insbesondere Kraftfahrzeugdach, das sandwichartig einteilig mit einem Dachhimmel ausgebildet, getrennt von der Fahrzeugkarosserie herstellbar, mit seinen Außenrändern auf einen geschlossenen, eine Karosserieöffnung begrenzenden Karosserierahmen auflegbar und mit diesem fest verbindbar ist, der Dachhimmel mit zur Verkleidung des Karosserierahmens ausgebildeten Bereichen über die Außenränder des Fahrzeugdachs über und ist durch eine Innenschale aus einem Schaumkunststoff, beispielsweise einem PUR-Schaumstoff gebildet, die eine obere Schicht und eine die überstehenden Bereiche bildende untere Schicht aufweist, wobei an einer Teilungsstelle von oberer Schicht und unterer Schicht an der unteren Schicht auf der der Himmelfläche abgelegenen Seite des Dachhimmels Sollknickstellen vorgesehen sind, die das gleichzeitige Umbiegen der überstehenden Bereiche nach unten und somit deren Durchtritt durch die Karosserieöffnung bei der Montage des Fahrzeugdachs erleichtern.

In einer Weiterbildung der Erfindung gemäß dem Patentanspruch 2 sind die Sollknickstellen durch kerbenähnliche Vertiefungen gebildet.

Nach der Lehre des Patentanspruchs 3 ist die Innenschale an den überstehenden Bereichen elastisch, während für diejenigen Bereiche der Innenschale, für die eine Flexibilität nicht erforderlich ist, härtere Schaumkunststoffe vorgesehen sind.

Die Außenränder der unteren Schicht können zur Befestigung an Flanschrändern des Karosserierahmens mittels Kunststoffprofilstreifen, Keder od. dgl. entsprechend paßgerecht beschnitten bzw. vorgeformt sein, wie im Patentanspruch 4 angegeben.

Entsprechend dem Patentanspruch 5 ist die Himmelfläche des Dachhimmels mit einem textilen oder folienartigen Bezugsmaterial beschichtet.

Schließlich geht nach der Lehre des Patentanspruchs 6 der Dachhimmel an der Himmelfläche fugenlos in seine der Verkleidung des Karosserierahmens dienenden überstehenden Bereiche über.

Weitere Einzelheiten werden anhand der unterschiedliche Fahrzeugdächer darstellenden Zeichnungen näher erläutert. Darin zeigt:

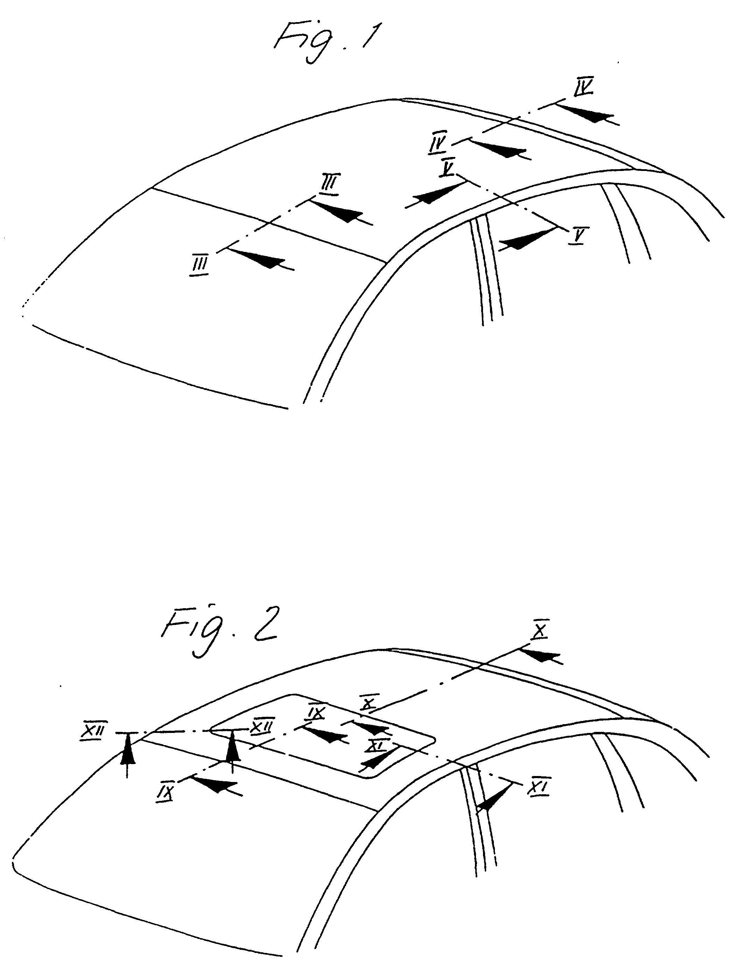

- Fig. 1: eine schematische Perspektivansicht eines schon an einer PKW-Karosserie angebrachten Fahrzeugdachs, nicht die Erfindung veranschaulichend,

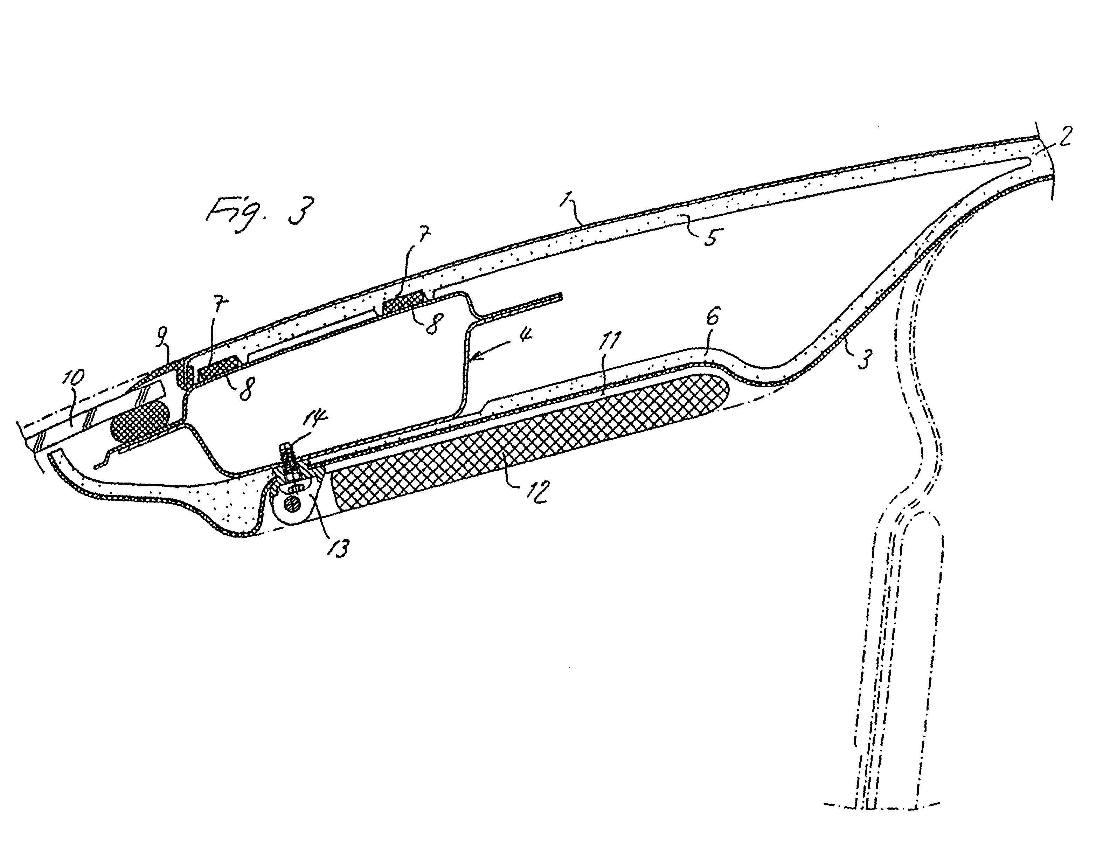

- Fig. 2: eine der Fig. 1 entsprechende Perspektivansicht, jedoch mit einer in das Fahrzeugdach eingebauten Schiebedacheinheit, nicht die Erfindung, veranschaulichend,
- Fig. 3: einen abgebrochenen Schnitt entsprechend der Linie III-III in Fig. 1 betreffend ein erstes Fahrzeugdach, nicht die Erfindung veranschaulichend,
- Fig. 4: einen abgebrochenen Schnitt entsprechend der Linie IV-IV in Fig. 1 betreffend das erste Fahrzeugdach nicht die Erfindung veranschaulichend,
- Fig. 5: einen abgebrochenen Schnitt entsprechend der Linie V-V in Fig. 1 betreffend das erste Fahrzeugdach nicht die Erfindung veranschaulichend,
- Fig. 6: einen der Fig. 3 ähnlichen Schnitt betreffend ein zweites Fahrzeugdach, der sämtliche Merkmale des Patentanspruchs 1 zeigt,
- Fig. 7: einen der Fig. 4 ähnlichen Schnitt betreffend das zweite Fahrzeugdach nicht die Erfindung veranschaulichend,
- Fig. 8: einen der Fig. 5 ähnlichen Schnitt betreffend das zweite Fahrzeugdach nicht die Erfindung veranschaulichend,
- Fig. 9: einen abgebrochenen Schnitt entsprechend der Linie IX-IX in Fig. 2 betreffend ein drittes Fahrzeugdach mit eingebautem Schiebedach, nicht die Erfindung veranschaulichend,
- Fig. 10: einen abgebrochenen Schnitt entsprechend der Linie X-X in Fig. 2 betreffend das dritte Fahrzeugdach nicht die Erfindung veranschaulichend,
- Fig. 11: einen abgebrochenen Schnitt entsprechend der Linie XI-XI in Fig. 2 betreffend das dritte Fahrzeugdach nicht die Erfindung veranschaulichend,
- Fig. 12: einen abgebrochenen Schnitt entsprechend der Linie XII-XII in Fig. 2 betreffend das dritte Fahrzeugdach, nicht die Erfindung veranschaulichend,
- Fig. 13: einen der Fig. 5 ähnlichen Schnitt betreffend ein nur mit dieser Fig. gezeigtes viertes Fahrzeugdach, nicht die Erfindung veranschaulichend,
- Fig. 14: einen der Fig. 5 ähnlichen Schnitt betreffend ein nur in den Fig. 14 und 15 gezeigtes fünftes Fahrzeugdach, nicht die Erfindung veranschaulichend,
- Fig. 15: einen der Fig. 14 ähnlichen Schnitt betreffend ein anderes Ausstattungsdetail des fünften Fahrzeugdachs, nicht die Erfindung veranschaulichend,
- Fig. 16A: eine das Montageverfahren erläuternde Perspektivdarstellung eines Fahrzeugdachs vor dem Einbau,
- Fig. 16B: das Fahrzeugdach gemäß Fig. 16A, jedoch einbaufertig mit nach unten umgebogenen Bereichen des Dachhimmels bzw. der Innenschale und
- Fig. 16C: eine Perspektivansicht der PKW-Karosserie vor der Dachmontage, wobei die Fig. 16A bis 16C nicht die Erfindung veranschaulichen.

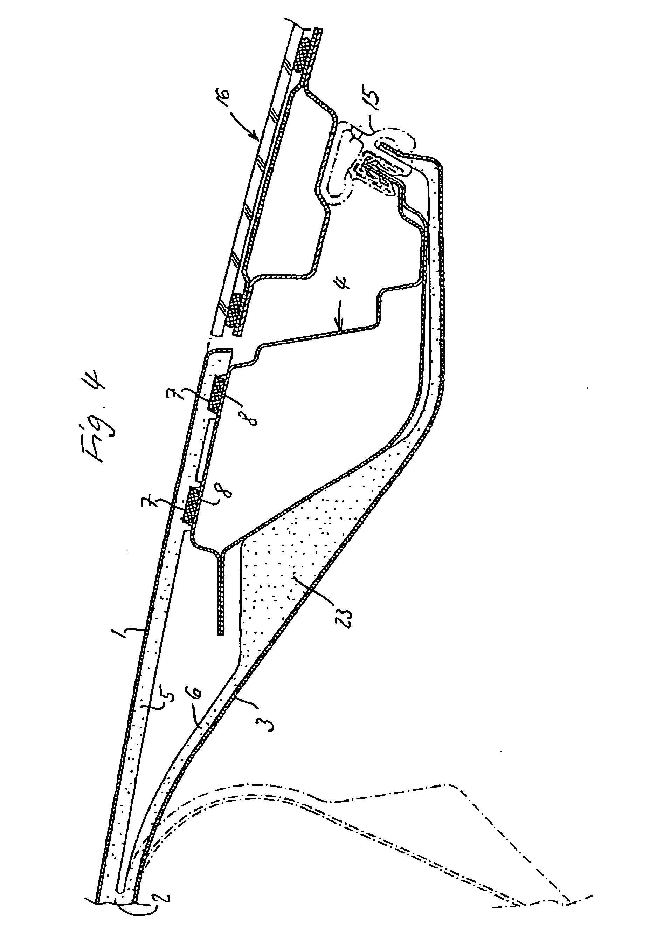

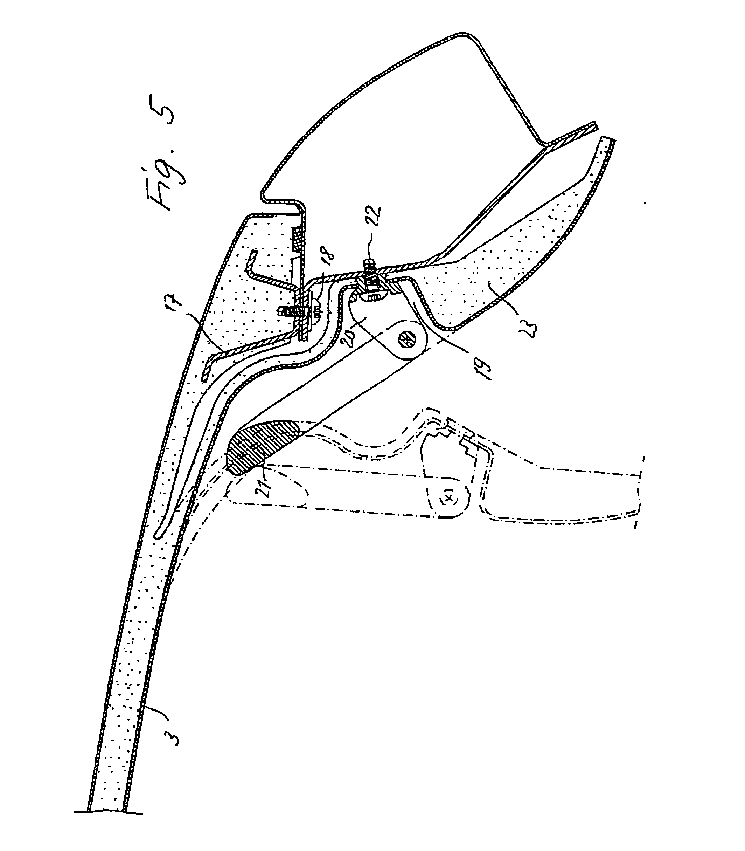

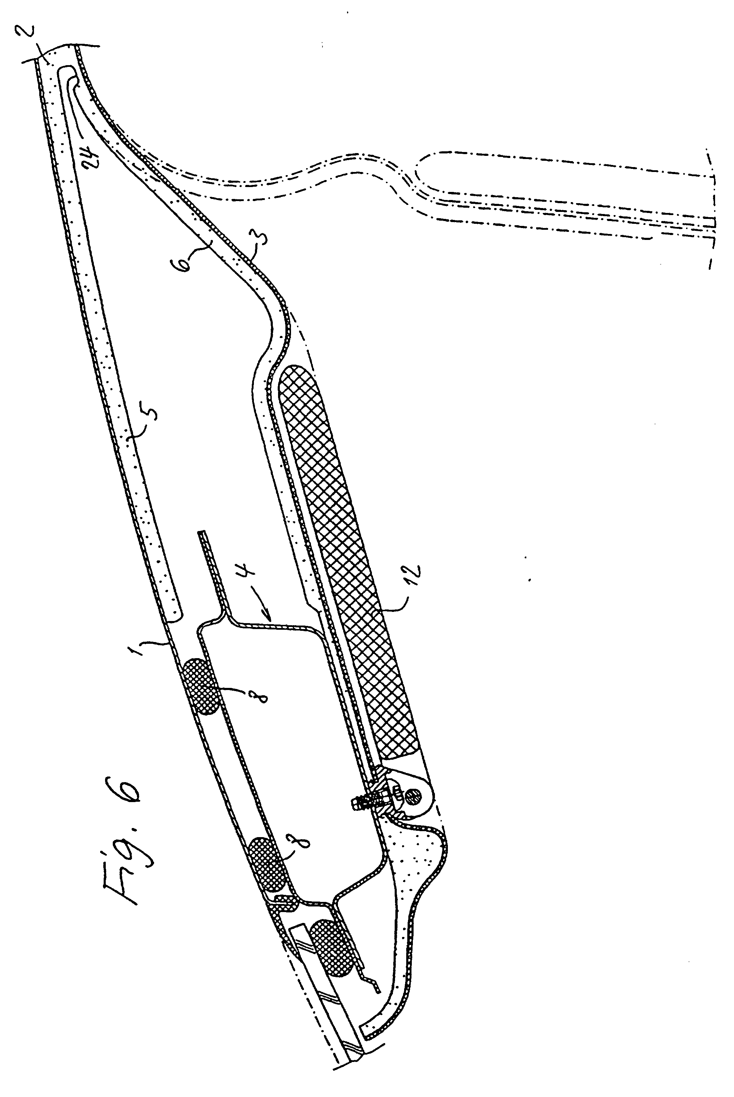

Zur näheren Erläuterung des ersten Fahrzeugdachs wird zunächst auf die Fig. 3 bis 5 Bezug genommen. Das daraus ersichtliche Fahrzeugdach besteht aus einer aus einem metallischen Werkstoff, z.B. Stahlblech geformten Außenschale oder Dachhaut 1 und einer damit sandwichartig verbundenen Innenschale 2, die aus einem Schaumkunststoff, beispielsweise einem PUR-Schaumstoff gebildet ist. Die Innenfläche der Innenschale 2 ist zur Ausbildung des Dachhimmels mit einem textilen oder folienartigen Bezugsmaterial 3 beschichtet. Wie bei allen hier gezeichneten und beschriebenen Schnittdarstellungen ist der Einbauzustand des Fahrzeugdachs dargestellt, bei dem die Außenränder des Dachs auf den Karosserierahmen 4 aufgelegt sind. In Fig. 3 ist der vordere Querholm, in Fig. 4 der hintere Querholm und,in Fig. 5 einer der Seitenholme des Karosserierahmens 4 dargestellt.

Die Innenschale 2 ist im Bereich der zur Auflage auf den Karosserierahmen 4 vorgesehenen Außenränder in zwei Schichten aufgeteilt, von denen die obere Schicht 5 auf den Karosserierahmen 4 aufgelegt ist, während die untere Schicht 6 über die Außenränder des Fahrzeugdachs übersteht. Die untere Schicht 6 ist für den Durchtritt durch die von dem Karosserierahmen 4 begrenzte Karosserieöffnung nach unten ohne bleibende Deformation umbiegbar, wie das in den Fig. in strichpunktierten Linien angedeutet ist. Diese nach unten umbiegbare untere Schicht 6 ist an die nach unten bzw. innen weisenden Flächen des Karosserierahmens 4 angelegt und auf noch zu beschreibende Weise befestigt.

Die obere Schicht 5 ist im Bereich ihrer Auflage auf den Karosserierahmen 4 mit in den Schaumstoff eingeformten Aufnahmenuten 7 für Klebstoff 8 versehen. Auf diese Weise ist das Fahrzeugdach fest mit dem Karosserierahmen 4 verbunden. Im vorderen Bereich ist auf eine Abkantung der Außenschale 1 ein Lippenprofil 9 aufgesteckt, das der Windschutzscheibe 10 anliegt. Die untere Schicht 6 verkleidet den Karosserierahmen 4 vollständig und ist in ihrem vorderen Bereich mit Vertiefungen 11 versehen, welche schwenkbare Sonnenblenden 12 aufnehmen. Die Schwenklagerböcke 13 der Sonnenblenden 12 sind in entsprechende Ausnehmungen in der unteren Schicht 6 und dem Bezugsmaterial 3 verrastet, was eine Vormontage der Sonnenblenden an der Innenschale ermöglicht. Nach dem Verkleiden des Karosserierahmens 4 werden durch die Schwenklagerböcke hindurch Befestigungsschrauben 14 in den Karosserierahmen 4 eingeschraubt.

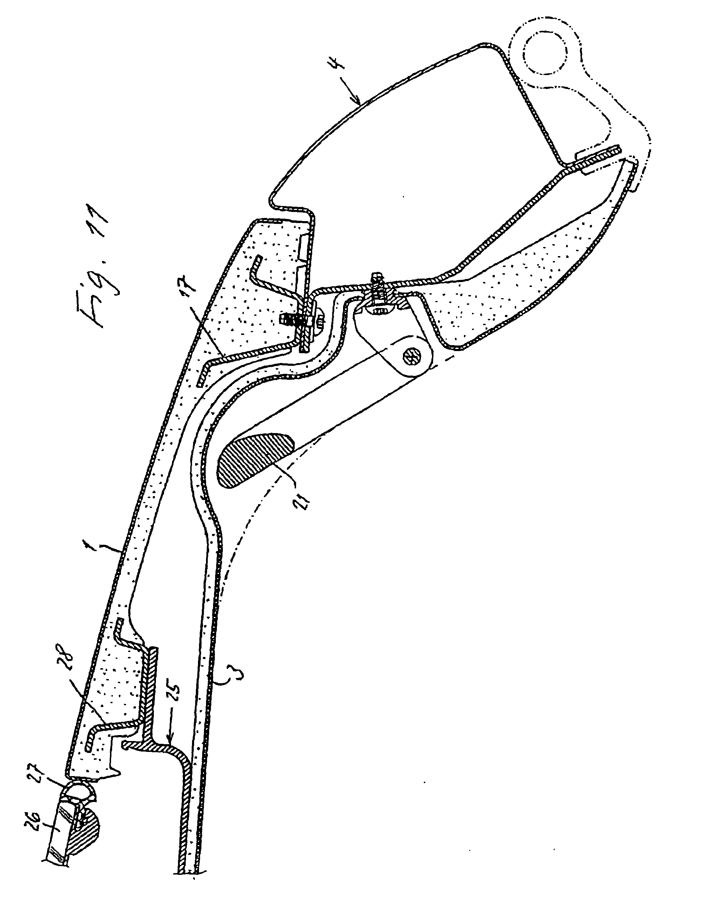

An den aus Fig. 4 ersichtlichen hinteren Querholm des Karosserierahmens 4 ist die untere Schicht 6 angelegt und mit diesem über einen sowohl auf einen Flansch des Querholms als auch auf den Außenrand der unteren Schicht 6 aufgesteckten Keder 15 fest verbunden. Der in Fig. 4 in strichpunktierten Linien dargestellte Keder ist zugleich das Abdichtprofil für die bei diesem Ausführungsbeispiel vorgesehene Heckklappe 16. Wie aus Fig. 5 hervorgeht, ist an den Seiten des Fahrzeugdachs in die obere Schicht 5 ein Verstärkungsteil 17 in Form eines durchgehenden Profils in den Schaumstoff eingebettet. Die untere Fläche des Verstärkungsteils 17 liegt dem Karosserierahmen unmittelbar flächig an. Hier ist das Fahrzeugdach mit den Seitenholmen des Karosserierahmens durch Befestigungsschrauben 18 fest verbunden, die durch einen Flansch des Karosserierahmens 4 hindurchgeführt und in das Verstärkungsteil 17 eingeschraubt sind. Diese Befestigung erfolgt vor der Verkleidung des Karosserierahmens 4 mit der unteren Schicht 6 der Innenschale 2, die auch in Fig. 5 in strichpunktierten Linien nach unten umgebogen dargestellt ist. Außen ist in den Schaumstoff der oberen Schicht 5 zusätzlich eine Aufnahmenut 7 für Klebstoff 8 angebracht. In Fig. 5 ist auch noch dargestellt, daß in Vertiefungen 19 der unteren Schicht 6 Schwenklagerböcke 20 für Haltegriffe 21 in entsprechende Bohrungen der unteren Schicht 6 und des Bezugsmaterials 3 eingerastet sind. Auch die Haltegriffe 21 mit ihren Schwenklagerböcken 20 können daher an dem Fahrzeugdach vormontiert werden. Wie unter Bezugnahme auf Fig. 3 anhand der dort gezeigten Sonnenblenden 12 schon beschrieben wurde, werden auch bei den Haltegriffen 21 Befestigungsschrauben 22 durch die Schwenklagerböcke 20 hindurchgeführt und in den Karosserierahmen 4 eingeschraubt. Zusätzlich zu dieser Befestigung wird noch der Außenrand der unteren Schicht 6 mit einem entsprechenden Flansch des Karosserierahmens 4 durch einen hier nicht gezeigten Keder verbunden, wie er in strichpunktierten Linien in Fig. 11 an dieser Stelle angedeutet ist.

Wie aus den Fig. 3 bis 5 weiterhin hervorgeht, ist die untere Schicht 6 nicht durchweg von gleichbleibender Dicke ausgeführt, sondern entsprechend dem Stabilitäts- bzw. Polsterungsbedürfnis auch in Teilbereichen dickwandiger ausgebildet. Durch entsprechende Ausbildung der Fertigungsform lassen sich derartige unterschiedliché Schichtdicken ohne weiteres erzielen. Weiterhin ist aus den Fig. ersichtlich, daß sich zwischen der oberen Schicht 5 und der unteren Schicht 6 der Innenschale 2 zum Teil erhebliche Hohlräume befinden. Diese können als Kanäle für die Unterbringung von Kabeln, aber auch als Luftkanäle verwendet werden. Die Außenränder der nach unten umbiegbaren Bereiche der Innenschale 2 d.h. der unteren Schicht 6 bei dem in Rede stehenden Fahrzeugdach sind entsprechend ihrer am Karosserierahmen 4 vorgesehenen Befestigung paßgerecht geschnitten bzw. vorgeformt. Die bereits erwähnten Schichtverdickungen der unteren Schicht 6 bilden, wie aus den Fig. 4 und 5 besonders deutlich hervorgeht, stoßabsorbierende Sicherheitselemente 23, die in diesen Bereichen ein direktes Auftreffen von Körperteilen der Fahrzeuginsassen auf den Karosserierahmen 4 verhindern bzw. die Folgen eines Auftreffens mildern.

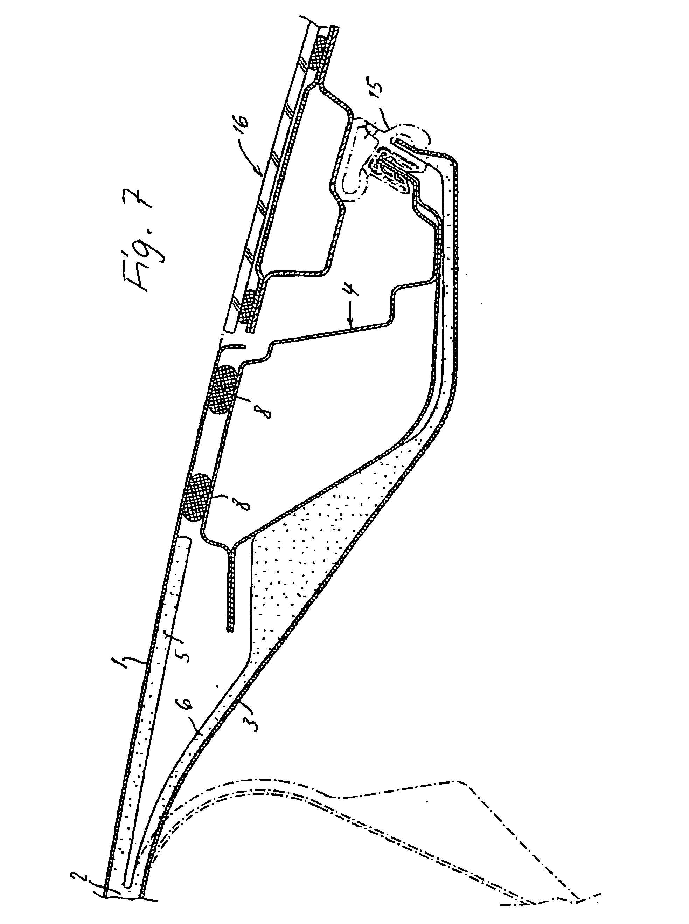

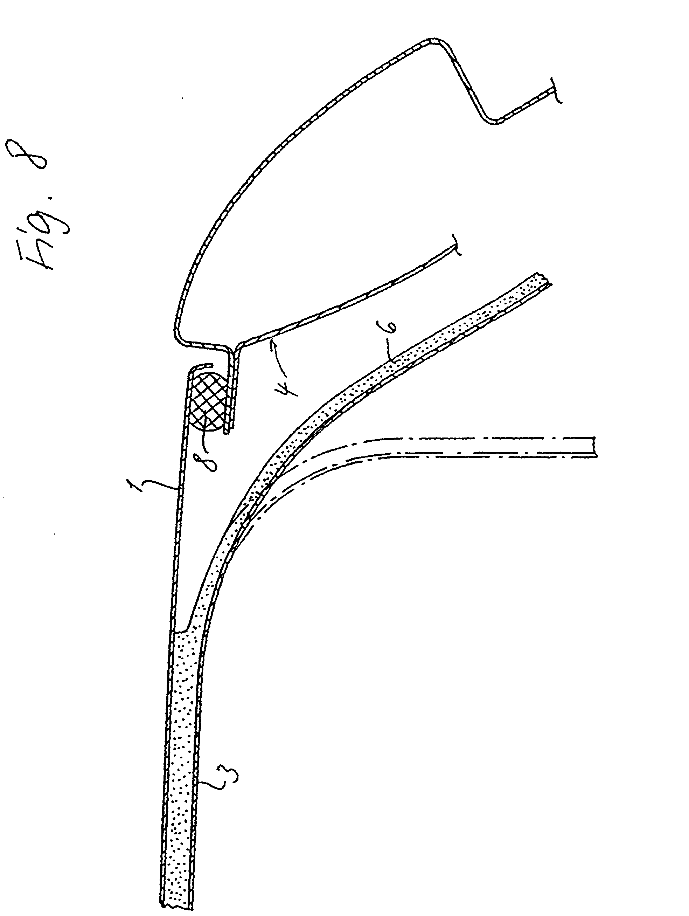

Zur näheren Erläuterung des zweiten Fahrzeugdachs wird nunmehr auf die Fig. 6 bis 8 Bezug genommen, wobei aber lediglich die zum ersten Fahrzeugdach gemäß der Fig. 3 bis 5 bestehenden Unterschiede hingewiesen werden soll. Während bei dem ersten Fahrzeugdach die Innenfläche der Dachhaut 1 vollständig ausgeschäumt ist, befindet sich bei dem zweiten Fahrzeugdach im Bereich der zur Auflage auf den Karosserierahmen 4 bestimmten Außenränder der starren Dachhaut 1 keine Ausschäumung. Die obere Schicht 5 endet vorn und hinten (Fig. 6 und 7) mit Abstand vor den Außenrändern des Fahrzeugdachs, kann in diesem Bereich aber auch völlig fehlen, so daß aus der Innenschale 2 lediglich eine dünnere untenliegende Schicht 6 weitergeführt ist, wie das aus Fig. 8 hervorgeht. Jedenfalls ist die unterhalb der Dächhaut 1 befindliche Innenschale im Bereich der Auflage auf den Karosserierahmen 4 nicht mit der Dachhaut 1 verbunden. Die über die Außenränder des Fahrzeugdachs überstehende Innenschale ist wiederum für den Durchtritt durch die von dem Karosserierahmen 4 begrenzte Karosserieöffnung nach unten ohne bleibende Deformation umbiegbar und dient der bereits beschriebenen Verkleidung des Karosserierahmens 4. Während beim ersten Fahrzeugdach gemäß der Fig. 3 bis 5 eine feste Dachhaut 1 nicht unbedingt erforderlich ist, wenn die Innenschale 2 genügend Formstabilität aufweist, ist bei dem Fahrzeugdach nach den Fig. 6 bis 8 eine starre tragende Dachhaut 1 zwingend erforderlich. Die Verbindung der Dachhaut 1 und damit des gesamten Fahrzeugdachs mit dem Karosserierahmen 4 übernimmt auch hier in Raupen aufgetragener Klebstoff 8. Bei diesem zweiten Fahrzeugdach ist in Fig. 6 an der Teilungsstelle von oberer Schicht 5 und unterer Schicht 6 angedeutet, daß an den Umbiegungs- oder Knickstellen auf der der Himmelfläche abgelegenen Seite kerbenähnliche Vertiefungen 24 vorgesehen sein können, welche das vorübergehende Abbiegen der unteren Schicht 6 wesentlich erleichtern. Entsprechende Vertiefungen können auch bei den anderen Fahrzeugdächern vorgesehen sein.

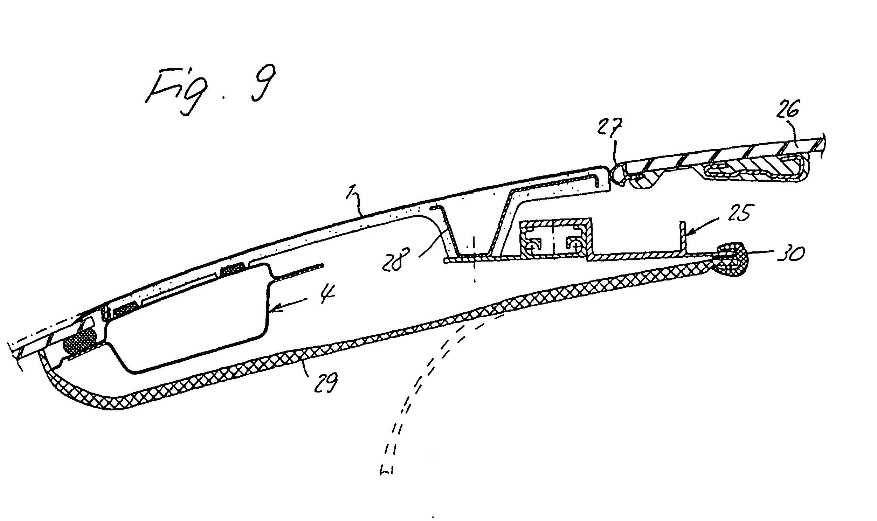

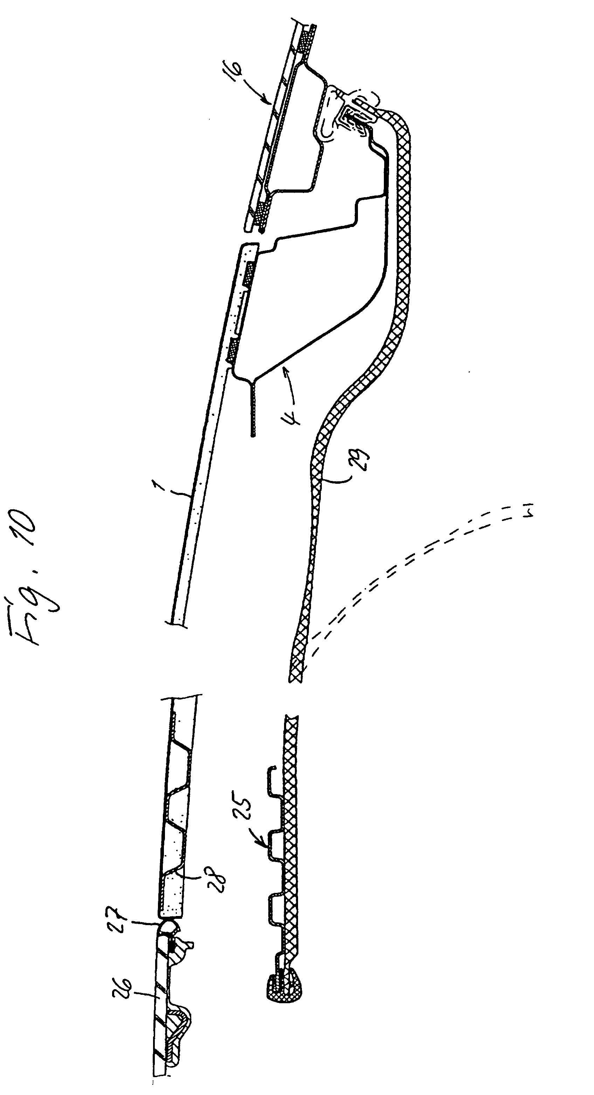

Das dritte Fahrzeugdach wird nunmehr anhand der Fig. 9 bis 12 näher beschrieben. Die Besonderheit dieses Fahrzeugdachs besteht darin, daß sich in dem Fahrzeugdach eine vormontierte Schiebedacheinheit befindet. Von dieser sind in den genannten Fig. im wesentlichen der Schiebedachrahmen 25, der beispielsweise als Glasdeckel ausgebildete Schiebedeckel 26, das Randspaltabdichtungsprofil 27 und ein die in der festen Dachhaut 1 angebrachte Dachöffnung umgebender Verstärkungsrahmen 28 dargestellt. Im gezeichneten Beispiel ist die feste Dachhaut 1 ausgeschäumt und auf die schon beschriebene Weise mit ihren Randbereichen auf den Karosserierahmen 4 aufgelegt und damit fest verbunden. Bei diesem dritten Fahrzeugdach ist der als Innenschale 29 vorgeformte Dachhimmel mit Abstand zu der starren Dachhaut 1 an dem unterhalb der Dachhaut 1 befestigten Schiebedachrahmen 25 angebracht. Die wiederum über die Außenränder des Fahrzeugdachs überstehende Innenschale 29 ist für den Durchtritt durch die von dem Karosserierahmen 4 begrenzte Karosserieöffnung nach unten ohne bleibende Deformation umbiegbar und zur Verkleidung des Karosserierahmens 4 und des Schiebedachrahmens 25 ausgebildet. Während die Anbringung und Befestigung der Innenschale 29 an dem Karosserierahmen 4 auf die schon beschriebene Weise erfolgt, übernimmt die Befestigung der Innenschale 29 an dem Schiebedachrahmen 25 ein Aufsteckkeder 30, der sowohl auf einen Flansch des Schiebedachrahmens 25 als auch auf den Öffnungsrand der Innenschale 29 aufgesteckt ist, wie das aus den Fig. 9, 10 und 12 hervorgeht. In diesen Fig. ist auch die nach unten umgebogene Montagelage der Innenschale 29 in strichpunktierten Linien dargestellt. Während in den Fig. 9, 10 und 12 durch Weglassen des Bezugsmaterials 3 angedeutet ist, daß die Innenschale 29 an ihrer dem Fahrzeuginnenraum zugekehrten Fläche auch ohne Bezugsmaterial ausgeführt sein kann, veranschaulicht die zu diesem dritten Fahrzeugdach gehörende Fig. 11 aber, daß auch hier Bezugsmaterial 3 vorhanden sein kann.

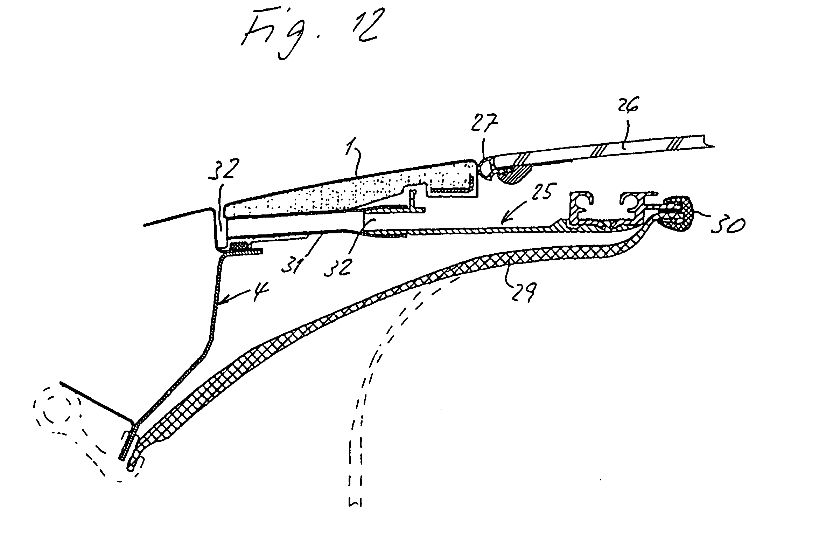

Aus Fig. 12 geht hervor, auf welche Weise über den Randspalt zwischen der festen Dachhaut 1 und dem Schiebedeckel 26 eintretendes und von dem Schiebedachrahmen 25 aufgefangenes Wasser nach außen abgeleitet werden kann. Zu diesem Zweck ist in der an der Unterseite der festen Dachhaut 1 angebrachten Schaumschicht ein Schlauch- oder Rohrstück 31 eingebettet, das einerseits auf eine Abflußtülle 32 des Schiebedachrahmens 25 dicht aufgesteckt ist und andererseits mit einer Öffnung an der. Außenkante des Fahrzeugdachs endet. Hier mündet das Schlauchoder Rohrstück 31 in eine Wasserablauffuge 32, die zwischen dem Außenrand der Dachhaut und der ihm zugekehrten Fläche des Karosserierahmens 4 gebildet ist.

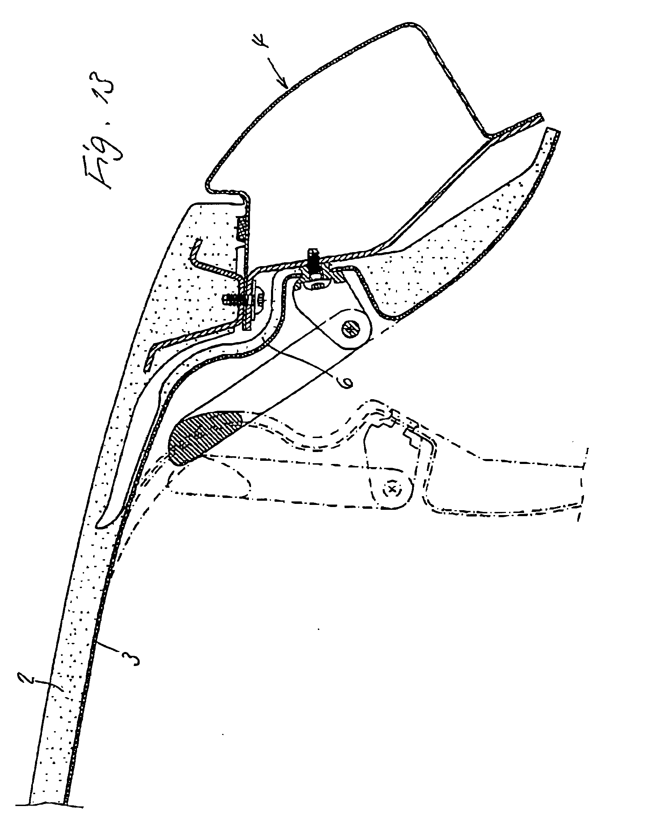

Das vierte Fahrzeugdach, das in Fig. 13 dargestellt ist, entspricht im wesentlichen dem schon unter Bezugnahme auf die Fig. 3 bis 5 ausführlich beschriebenen ersten Fahrzeugdach Im Unterschied dazu besitzt das vierte Fahrzeugdach keine feste Dachhaut. Hier besteht das Fahrzeugdach im wesentlichen aus einem harten schalenförmig geformten Schaumkunststoff mit glatter lackierbarer Außenfläche. Selbstverständlich können in den Schaumkunststoff noch zusätzliche in Querrichtung aber auch in Längsrichtung geführte Verstärkungen eingebettet sein. Die Innenschale 2 ist zugleich Außenschale.

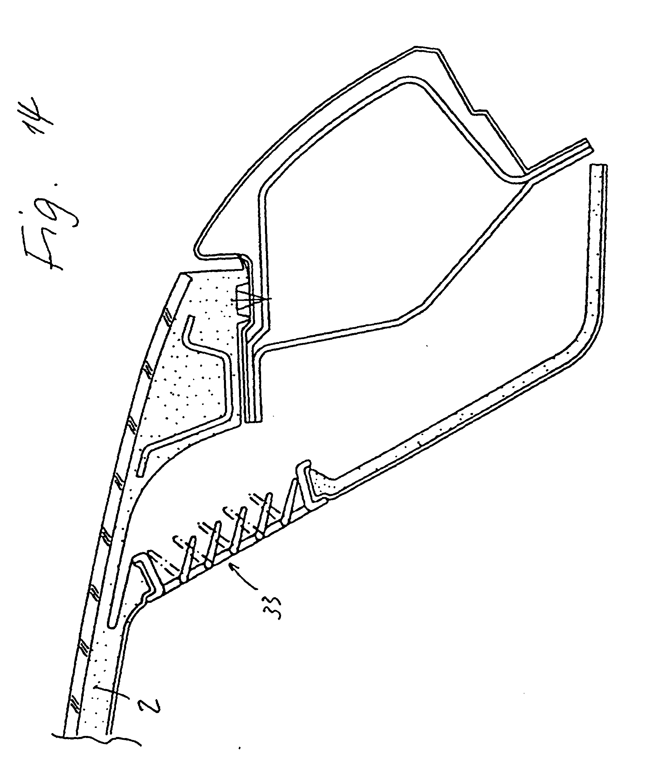

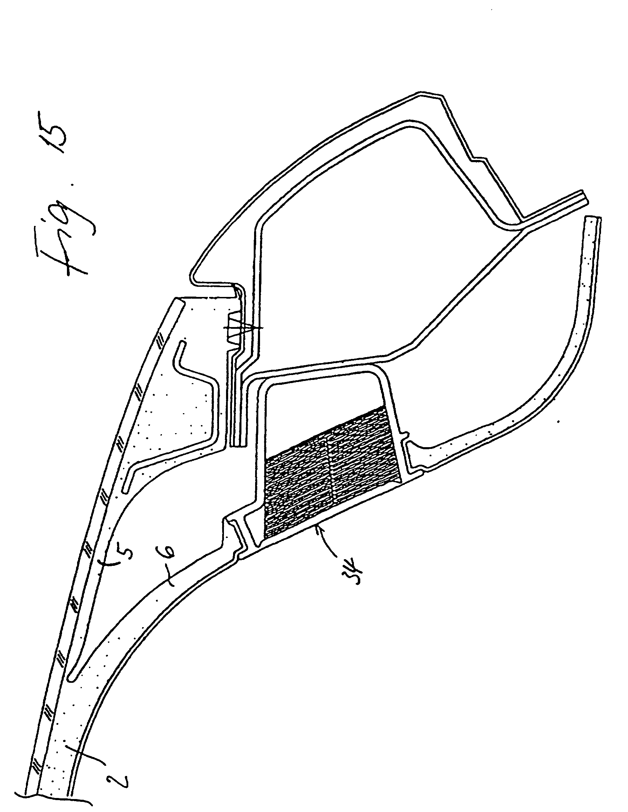

Das fünfte Fahrzeugdach schließlich ist den Fig. 14 und 15 zu entnehmen. Das fünfte Fahrzeugdach unterscheidet sich nicht grundsätzlich von dem mit Bezug auf die Fig. 3 bis 5 beschriebenen ersten Fahrzeugdach, mit der Ausnahme, daß hier die dünne Dachhaut 1 ersetzt ist durch eine dickere aus einem transparenten Kunststoff oder Glas gebildete Dachhaut. In diesen Fig. ist aber auch dargestellt, daß an der unteren Schicht 6 nicht nur Sonnenblenden oder Haltegriffe vormontiert werden können, sondern auch Lüftungsgitter 33 (Fig. 14) und sogar Airbags 34 (Fig. 15). Entsprechendes gilt auch für das mit Bezug auf die Fig. 9 bis 12 beschriebene dritte Fahrzeugdach. Hierbei sind dann die vormontierten Elemente wie Sonnenblenden, Haltegriffe, Lüftungsgitter, stoßabsorbierende Sicherheitselemente, Airbags und dgl. an der Innenschale 29 vormontiert.

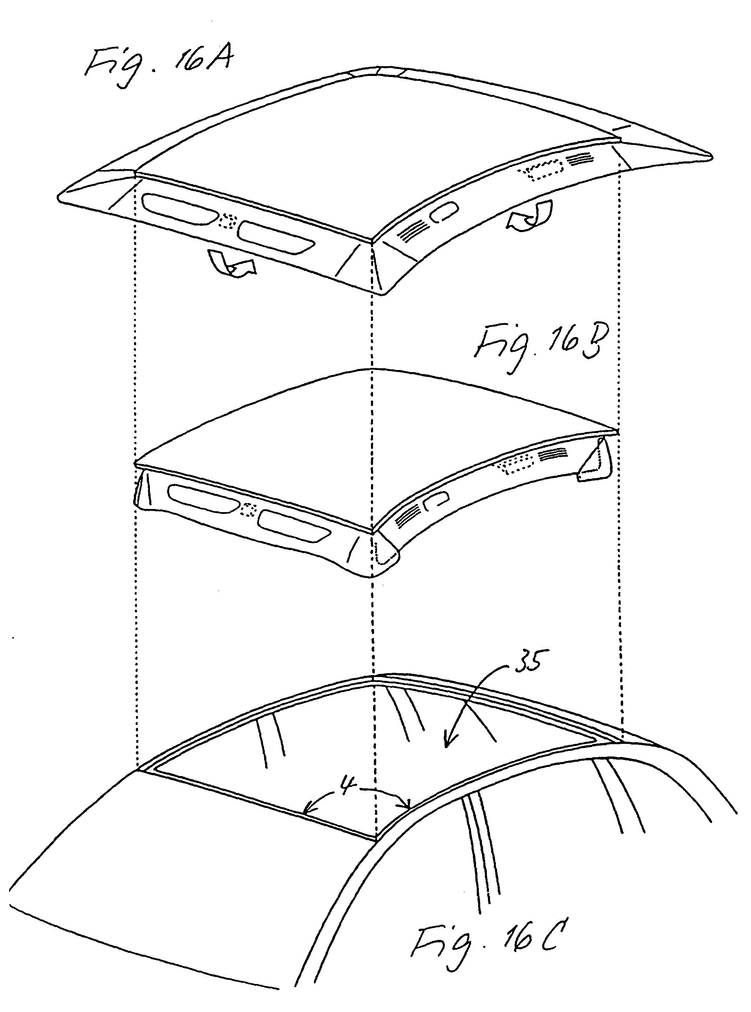

Das Montageverfahren für das beschriebene Fahrzeugdach, das für alle Fahrzeugdächer gleich ist, wird nachfolgend anhand der Fig. 16A bis 16C beschrieben. Das getrennt von der übrigen Fahrzeugkarosserie hergestellte Fahrzeugdach mit allen seinen an der Innenschale vormontierten Elementen hat zunächst etwa das in Fig. 16A dargestellte Aussehen. Deutlich sind die über den Außenrand des Fahrzeugdachs vorstehenden Bereiche der Innenschale zu erkennen. Nunmehr wird die über die Außenränder des Fahrzeugdachs überstehende Innenschale bzw. die untere Schicht der Innenschale unter partieller Faltung in den Eckbereichen nach unten umgebogen, wie das Pfeile in Fig. 16A verdeutlichen. Hierbei erfolgt eine nichtbleibende Deformation und in den Eckbereichen auch eine partielle Faltung der überstehenden Innenschale bzw. der unteren Schicht der Innenschale. Danach hat das Fahrzeugdach etwa die in Fig. 16B dargestellte Form eingenommen. Zur Erleichterung des Einführens der nun gewissermaßen schürzenähnlich herabhängenden Bereiche der Innenschale bzw. der unteren Schicht der Innenschale in die von dem Karosserierahmen 4 gebildete Karosserieöffnung 35 können die herabhängenden Bereiche und damit die umgebogene Lage dieser Bereiche vorübergehend durch ein umfänglich herumgelegtes Band, eine Schnur od. dgl. fixiert werden. Nach dem Aufsetzen des Fahrzeugdachs auf den Karosserierahmen 4 erfolgt zunächst die Befestigung des Fahrzeugdachs am Karosserierahmen, wobei die vorübergehende Fixierung noch beibehalten werden kann. Danach wird die Fixierung ggf. aufgehoben, die Innenschale bzw. die untere Schicht der Innenschale mit ihren zur Verkleidung des Karosserierahmens 4 ausgebildeten Bereichen zurückgebogen, an die nach unten bzw. innen weisenden Flächen des Karosserierahmens angelegt und schließlich ebenfalls am Karosserierahmen befestigt, wie das im einzelnen anhand der Schnittdarstellungen erläutert worden ist.

Entsprechend dem beschriebenen Verfahren zur Montage des Fahrzeugdachs an einem Karosserierahmen ist also vorgesehen, daß
(a) die über die Außenränder des Fahrzeugdachs überstehende Innenschale bzw. die untere Schicht der Innenschale unter partieller Faltung in den Eckbereichen nach unten umgebogen wird,
(b) das Fahrzeugdach unter Durchtritt der umgebogenen Bereiche der Innenschale durch den Karosserierahmen 4 hindurch mit seinen Außenrändern von oben dem Karosserierahmen 4 aufgelegt und daran befestigt wird, und
(c) die Innenschale mit ihren zur Verkleidung des Karosserierahmens 4 ausgebildeten Bereichen zurückgebogen, an die nach unten bzw. innen weisenden Flächen des Karosserierahmens 4 angelegt und dann am Karosserierahmen 4 befestigt wird.

Das Montageverfahren läßt sich dabei noch weiter dadurch verbessern, daß die umgebogene Lage der davon betroffenen Bereiche der Innenschale vorübergehend fixiert wird und die Fixierung nach Durchtritt der umgebogenen Bereiche durch den Karosserierahmen 4 und Befestigung des Fahrzeugdachs an dem Karosserierahmen 4 aufgehoben wird. Für die vorübergehende Fixierung ist es beispielsweise ausreichend, wenn die nach unten umgebogenen Bereiche der Innenschale durch ein um diese Bereiche von außen herumgelegtes flexibles Band oder ein Seil od. dgl. zusammengeschnürt werden.

Allen beschriebenen Fahrzeugdächern ist gemeinsam, daß das Fahrzeugdach mit einer vorgeformten den Dachhimmel bildenden Innenschale 2 ausgebildet ist mit der Besonderheit, daß diese über die Außenränder des Fahrzeugdachs allseits übersteht, auch an den Ecken, d.h. größer ist als die Innenabmessungen der von den Holmen oder Profilen des geschlossenen Karosserierahmens 4 begrenzten Karosserieöffnung 35, und daß der Dachhimmel an den überstehenden Bereichen so flexibel oder elastisch ist, daß er für den Durchtritt durch die von dem Karosserierahmen 4 begrenzte Karosserieöffnung 35 unter partieller Faltung in den Eckbereichen nach unten ohne bleibende Deformation umbiegbar und zur Verkleidung des Karosserierahmens 4 ausgebildet ist. Die überstehenden Bereiche des Dachhimmels bilden somit die Verkleidungen für die Dachrahmenprofile, so daß zusätzliche Abdeckleisten und Abdeckprofile auch an den Ecken nicht erforderlich sind. Das getrennt hergestellte Fahrzeugdach bringt in einteiliger Ausbildung schon alle Elemente mit, die nach dem Aufsetzen und Befestigen des Fahrzeugdachs auf den bzw. an dem Karosserierahmen 4 zur Verkleidung der Sichtflächen des Karosserierahmens 4 erforderlich sind. Dabei geht der eigentliche Dachhimmel fugenlos in seine der Dachrahmenverkleidung dienenden Bereiche über. Infolge der Einteiligkeit des modulartig getrennt hergestellten Fahrzeugdachs mit den Verkleidungsbereichen seines Himmels werden daher nicht nur kurze Montagezeiten am Endmontageband ermöglicht, sondern darüber hinaus eine fugenlose harmonische Gestaltung des gesamten Dachhimmels auch in seinen Übergangsflächen zu den verglasten Flächen der Kraftfahrzeugkarosserie, d.h. zu der Windschutzscheibe, den Seitenfenstern und dem Heckfenster, und auch in seinen Eckbereichen erzielt.

Das Fahrzeugdach, bei dem die Innenschale 2 im Bereich der zur Auflage auf den Karosserierahmen 4 vorgesehenen Außenränder in zwei Schichten 5, 6 aufgeteilt ist, von denen die obere Schicht 5 auf den Karosserierahmen 4 auflegbar ist, während die untere Schicht 6 über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 3 bis 5 und 13), ist in zwei Varianten möglich. Zum einen kann es mit einer äußeren Dachhaut 1, vorzugsweise einer starren Dachhaut, die beispielsweise aus Stahlblech geformt ist, versehen sein (Fig. 3 bis 5), zum anderen kann es aus einem geeigneten Hartschaum ohne äußere Dachhaut geformt sein (Fig. 13). Im letzteren Fall läßt sich die Außenseite so lackieren wie Karosserieblech.

Das Fahrzeugdach, bei dem die Innenschale 2 außen mit einer starren Dachhaut 1 versehen ist, deren Außenränder zur Auflage auf den Karosserierahmen 4 vorgesehen sind, während die unterhalb der Dachhaut 1 befindliche Innenschale 2 im Bereich der Auflage auf den Karosserierahmen 4 nicht mit der Dachhaut 1 verbunden ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 6 bis 8), setzt dagegen das Vorhandensein einer starren Dachhaut 1 voraus, deren Außenränder unmittelbar, d.h. ohne zwischenliegende Schaumschicht, auf den Dachrahmen auflegbar und daran zu befestigen sind.

Das Fahrzeugdach, bei dem der als Innenschale 29 vorgeformte Dachhimmel mit Abstand zu einer starren Dachhaut 1 an einem unterhalb der Dachhaut befestigten Schiebedachrahmen 25 angebracht ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 und des Schiebedachrahmens 25 ausgebildet ist (Fig. 9 bis 12), kann schließlich mit einer bereits funktionsfähig vormontierten Schiebedacheinheit versehen sein. Der als Innenschale 29 vorgeformte Dachhimmel ist hierbei an der Unterseite des Schiebedachrahmens 25 befestigt. Die Innenfläche der Dachhaut 1 kann in den an die Schiebedachöffnung angrenzenden Bereichen zur Verbesserung der Schall- und Wärmeisolation zusätzlich mit Schaumstoff beschichtet sein.

Für die Formung der Innenschale 2, 29 eignen sich PUR-Schaumstoffe, die für die vorliegenden Zwecke ausreichend flexibel oder sogar elastisch einstellbar sind. Sollknickstellen, die das vorübergehende Umbiegen nach unten und die Faltung an den vier Ecken des Fahrzeugdachs erleichtern, sind vorgesehen. So kann die aus einem PUR-Schaumstoff geformte Innenschale 2, 29 an den Umbiegungs- oder Knickstellen auf der der Himmelfläche abgelegenen Seite mit kerbenähnlichen Vertiefungen 24 versehen sein (Fig. 6). Für diejenigen Bereiche der Innenschale 2, für die eine Flexibilität nicht erforderlich ist, können auch härtere Schaumstoffe zur Anwendung gelangen. Dies gilt insbesondere für den Fall, daß das Fahrzeugdach keine starre tragende Außenhaut 1 aufweist.

Weiterhin können die nach unten umbiegbaren Bereiche der Innenschale 2, 29 an den dafür geeigneten Orten mit mindestens einem vormontierten Element aus der aus Sonnenblenden 12 (Fig. 3 und 6), Haltegriffen 21 (Fig. 5 und 11), Lüftungsgittern 33 (Fig. 14), Innenleuchten, stoßabsorbierenden Sicherheitselementen 23 (Fig. 4 und 5), Airbags 34 (Fig. 15) und dgl. bestehenden Gruppe bzw. mit vorbereiteten Anbringungsorten für mindestens eines dieser Elemente versehen sein. Hierdurch wird der Montageaufwand am Montageband noch weiter vereinfacht, weil sich entweder die betreffenden Elemente leicht an dafür vorgesehenen Stellen anbringen lassen oder sogar schon an dem modulartigen Fahrzeugdach vormontiert vorhanden sind.

Im Interesse einer möglichst umfassenden Vorfertigung des Fahrzeugdachs ohne das Erfordernis nachträglicher Anpassungsarbeiten an den Karosserierahmen 4 können vorteilhaft die Außenränder der nach unten umbiegbaren Bereiche der Innenschale 2, 29 zur Befestigung an Flanschrändern des Karosserierahmens 4 mittels Kunststoffprofilstreifen, Keder od. dgl. 15 entsprechend paßgerecht beschnitten bzw. vorgeformt sein (Fig. 4 und 7). Ein so vorbereitetes Fahrzeugdach kann an allen vier Seiten ohne weiteres mit dem Karosserierahmen 4 vereinigt werden.

Soll das Fahrzeugdach ausschließlich oder zusätzlich zu Schraubverbindungen durch Kleben mit dem Karosserierahmen 4 vereinigt werden, so sind die Dachränder zweckmäßig so zu gestalten, daß sie in ihren zur Auflage auf den Karosserierahmen 4 vorgesehenen Bereichen mit im Schaumstoff eingeformten Aufnahmenuten 7 für Klebstoff versehen sind (Fig. 3 und 4).

Die Dachränder können in ihren zur Auflage auf den Karosserierahmen 4 vorgesehenen Bereichen mit in den Schaumstoff eingebetteten Verstärkungsteilen 17 versehen sein (Fig. 5 und 11), die für eine Aussteifung des Fahrzeugdachs sorgen und damit nicht nur der Transport- und Handhabungsfähigkeit des vormontierten Fahrzeugdachs, sondern auch zu seiner Versteifung nach der Montage am Karosserierahmen 4 dienen. Die hierfür vorgesehenen im Schaumstoff eingebetteten Verstärkungsteile 17 müssen nicht vollständig vom Schaumstoff umhüllt sein, sondern können mit ihren unteren Flächen freiliegen, so daß sie dem Karosserierahmen 4 unmittelbar zur Befestigung flächig aufgelegt werden können bzw. mit ihrer unteren Fläche unmittelbar flächig anliegen.

## Patentansprüche

1. Fahrzeugdach, insbesondere Kraftfahrzeugdach, das sandwichartig einteilig mit einem Dachhimmel ausgebildet, getrennt von der Fahrzeugkarosserie herstellbar, mit seinen Außenrändern auf einen geschlossenen, eine Karosserieöffnung (35) begrenzenden Karosserierahmen (4) auflegbar und mit diesem fest verbindbar ist, wobei der Dachhimmel mit zur Verkleidung des Karosserierahmens (4) ausgebildeten Bereichen über die Außenränder des Fahrzeugdachs übersteht und durch eine Innenschale (2) aus einem Schaumkunststoff, beispielsweise einem PUR-Schaumstoff gebildet ist, die eine obere Schicht (5) und eine die überstehenden Bereiche bildende untere Schicht (6) aufweist, wobei an einer Teilungsstelle von oberer Schicht (5) und unterer Schicht (6) an der unteren Schicht (6) auf der der Himmelfläche abgelegenen Seite des Dachhimmels Sollknickstellen vorgesehen sind, die das gleichzeitige Umbiegen der überstehenden Bereiche nach unten und somit deren Durchtritt durch die Karosserieöffnung (35) bei der Montage des Fahrzeugdachs erleichtern.

2. Fahrzeugdach nach Anspruch 1, wobei die Sollknickstellen durch kerbenähnliche Vertiefungen (24) gebildet sind.

3. Fahrzeugdach nach Anspruch 1, wobei die Innenschale (2) an den überstehenden Bereichen elastisch ist, während für diejenigen Bereiche der Innenschale (2), für die eine Flexibilität nicht erforderlich ist, härtere Schaumkunststoffe vorgesehen sind.

4. Fahrzeugdach nach Anspruch 1, wobei die Außenränder der unteren Schicht (6) zur Befestigung an Flanschrändern des Karosserierahmens (4) mittels kunstsoffprofilstreifen, Kerder od. dgl. (15) entsprechend paßgerecht beschnitten bzw vorgeformt sind.

5. Fahrzeugdach nach Anspruch 1, wobei die Himmelfläche des Dachhimmels mit einem textilen oder folienartigen Bezugsmaterial (3) beschichtet ist.

6. Fahrzeugdach nach Anspruch 1, wobei der Dachhimmel an der Himmelfläche fugenlos in seine der Verkleidung des Karosserierahmens (4) dienenden überstehenden Bereiche übergeht.

## Claims

1. Vehicle roof, particularly motor vehicle roof, which is constructed in sandwich-like manner in one piece with a roof lining, is manufacturable separately from the vehicle body, can be placed with its outer edges on a closed body frame (4) bounding a body opening (35) and is firmly connectable thereto, the roof lining projecting over the outer edges of the vehicle roof with areas constructed for lining the body frame (4) and formed by an inner shell (2) of a foam material, e.g. a PUR foam, which has an upper layer (5) and a lower layer (6) forming the projecting areas, nominal bending points being provided at a dividing point between the upper layer (5) and the lower layer (6) on the side of the latter remote from the lining surface and said nominal bending points facilitate the simultaneous bending downwards of the projecting areas and consequently their passage through the body opening (35) during the installation of the vehicle roof.

2. Vehicle roof according to claim 1, wherein the nominal bending points are formed by notch-like depressions (24).

3. Vehicle roof according to claim 1, wherein the inner shell (2) is elastic on the projecting areas, whereas for those areas of the inner shell (2) not necessary for flexibility purposes more rigid foam materials are provided.

4. Vehicle roof according to claim 1, wherein the outer edges of the lower layer are preshaped or trimmed in precise fitting manner by means of plastic profile strips, beadings or the like (15) for fixing to flange edges of the body frame (4).

5. Vehicle roof according to claim 1, wherein the lining surface of the roof lining is covered with a textile or sheet-like covering material (3).

6. Vehicle roof according to claim 1, wherein at the lining surface the roof lining passes in jointless manner into its projecting areas used for lining the body frame (4).

## Revendications

1. Toit de véhicule, en particulier toit de véhicule automobile qui, formé d'un garnissage de toit d'une seule pièce selon une construction sandwich, est apte à être fabriqué séparément de la carrosserie, est apte à être posé avec ses bords extérieurs sur un cadre de carrosserie (4) fermé et définissant une ouverture de carrosserie (35), et est apte à être relié solidement à ce cadre (4), étant précisé que le garnissage de toit dépasse, avec des zones conçues pour recouvrir le cadre de carrosserie (4), des bords extérieurs du toit de véhicule et est formé par un revêtement intérieur (2) en matière plastique alvéolaire, par exemple en mousse PUR, qui comporte une couche supérieure (5) et une couche inférieure (6) formant les zones qui dépassent, et étant précisé qu'au niveau d'un point de séparation entre la couche supérieure (5) et la couche inférieure (6), il est prévu sur la couche inférieure (6), sur le côté du garnissage de toit opposé à la surface de plafond, des points de pliage qui facilitent le pliage simultané, vers le bas, des zones qui dépassent et, ainsi, le passage de ces zones à travers l'ouverture de carrosserie (35), lors du montage du toit de véhicule.

2. Toit de véhicule selon la revendication 1, sur lequel les points de pliage sont définis par des creux en forme d'encoches (24).

3. Toit de véhicule selon la revendication 1, dans lequel le revêtement intérieur (2) est élastique, au niveau des zones qui dépassent, tandis que pour les zones du revêtement intérieur (2) pour lesquelles une flexibilité n'est pas nécessaire, il est prévu des matières plastiques alvéolaires plus dures.

4. Toit de véhicule selon la revendication 1, dans lequel les bords extérieurs de la couche inférieure (6) sont coupés ou préformés d'une manière appropriée et ajustée en vue d'être fixés à des bords en forme d'ailes du cadre de carrosserie (4) à l'aide de bandes profilées en matière plastique, de bourrelets ou d'élément similaires (15).

5. Toit de véhicule selon la revendication 1, dans lequel la surface de plafond du garnissage de toit est recouverte d'un matériau de garniture textile ou en forme de feuille (3).

6. Toit de véhicule selon la revendication 1, dans lequel il y a une transition sans joint entre le garnissage de toit, au niveau de sa surface de plafond, et ses zones qui dépassent et qui servent à recouvrir le cadre de carrosserie (4).
